# EUROPEAN PATENT APPLICATION

(11) **EP 3 364 364 A1**
(43) Date of publication of application: **22.08.2018**
(21) Application number: 18157322.1
(22) Date of filing: 19.02.2018
(51) Int. Cl.: G06Q 50/00

(54) **METHOD TO DETECT INCIDENTS FROM SOCIAL NETWORK USE**

(30) Priority: 21.02.2017 US 201762461282 P; 13.03.2017 EP 17160608
(71) Applicant: Privately Sàrl, 1015 Lausanne (CH)
(72) Inventor: HELG, François, 1015 Lausanne (CH); HARKOUS, Hamza, 1015 Lausanne (CH)
(74) Representative: Wenger, Joel-Théophile

(57) **Abstract**

Social network posts are harvested to extract content features and interaction context features associated with incident threats in accordance with user preferences. User preferences may be any combination of supervisor preferences and end user preferences. The content features and the interaction context features may be fusioned, classified and analysed by an incident spotter module to detect incidents and raise notifications in accordance with incident detection thresholds adapted to the user preferences. User feedback may be collected and user preferences may be adjusted to refine the incident detection spotter sensitivity and specificity as the user needs and/or the interaction context evolve.

## Description

### Field

This specification relates to detecting incidents by monitoring social network usage with data processing systems and methods.

### Background

With the growth of social networks and cloud services on the one hand, and the facilitation of complex media content production, storage and distribution by end users ("content sharing") on the other hand, manual monitoring of communications is no longer possible. Content analysis methods and systems are now developed to facilitate the automation of content classification, ranging from keyword and sentiment analysis applicable to text messaging to the adaptation of computer vision solutions such as neural network pattern recognition schemes to online image and video content classification. US20150178383 by Google describes a data object classification system which labels data objects based on a high-dimensional numeric representation of category labels in a vocabulary set and the automated analysis, for instance with neural networks, of how close the data object matches the category label.

One particularly demanding application in that context is the need for better techniques to ensure well-being of young people online. In some cases this might require effective parental control of kid behavior on social networks, in particular with young adolescents. In most other cases it is more appropriate to provide the tools to young people to better regulate their own behaviour. Due to the evolution of mobile devices and internet communication technologies with social networks apps accessible from multiple clients, conventional parental control software no longer works. Indeed, there is no « one size fits all » and , as the kid grows, progressively constructing his/her personal identity and requiring more autonomy towards his/here future adult responsibility the supporting technology must adopt to that need. New types of content analysis solutions are required, together with means to foster kid and parent engagement to deal with online threats and risks. Teenagers and increasingly Tweens are also very sensitive to trends and early adopters of new tools and fashionable behaviors, possibly significantly detrimental to their health and general development, such as excessive screen time , inappropriate sharing, self-harm or political and religious radicalization. This raises specific challenges to content classification because state of the art solutions are too static to continuously adapt to the evolving individual needs, and parents cannot be required to constantly switch tools or re-parametrize the settings as their kid grows and the threats to kid privacy evolve.

Another increasingly demanding application is the need for better corporate information technology (IT) security control of employee behaviour on devices and social networks, in particular as the « Bring Your Own Device » (BYOD) practice develops in the corporate world. Due to the evolution of mobile devices and internet communication technologies with social networks apps accessible from multiple clients and through multiple networks (e.g. 4G in parallel with the corporate intranet), conventional antivirus software and corporate firewalls are no longer sufficient to confine the threat of corporate information leakage to the outside world. Also the blurring boundaries between personal and official time and the constant distraction of notifications, frequently checking messages and social media is a reason of falling productivity at work. While in the following application examples will be described primarily within the context of a parental control/child empowerment application for illustrative purposes, it will be apparent to one skilled in the art that the proposed systems and methods may also be applicable to other contexts, such as corporate IT security or cybesecurity incident detection in threatened environments such as critical infrastructure IT operations.

A number of legacy solutions are device-centric, which no longer fits the content-centric usage of social media as raised in the past decade. US20150058242 discloses a method to monitor text or image mobile communications and generate alerts associated with targeted content, using a monitoring device to which incoming and outgoing communications to/from the monitored device are forwarded. But this method does not work for content that is encrypted by the social networks, and it requires a monitoring device to persistently monitor the communications. Similarly, WO20150095597 by Websafety (https://www.websafety.com/) primarily describes the use of a monitoring module (e.g. in the form of an iOS or Android app) to be installed on the child device, while US20150256423 discloses a method to monitor child activities on multiple devices by aggregating and analyzing the activity data relating to the activities on the various devices. These methods are derived from legacy parental control software solutions that are device/usage centric rather than content-centric ; in practice, they do not efficiently fit current usages of social networks that are no longer bound to specific devices.

US20090217342 by IBM discloses a supervisory scheme for controlling social networking activities, that may also be adapted to parental control. The disclosure focuses on the management of the supervisory account and the supervised account in a social networking environment. A content limiter enables to automatically approve requested content based on rules supplied by the parent, thereby avoiding the burden of manual parental review and authorization, but it does not address how to adapt this content limiter and the parental rules to individual needs beyond explicit registration of each rule by the parent in the user interface. Only a simple content limitation example is described as the name, address and telephone number detection in the content. This method does not scale well with current usages of social networks that dynamically evolve towards more and more complex media content sharing schemes.

US20130097261 by SafeCommunications discloses a safe messaging system where messages directed to the child account are reviewed and approved from a parent review interface. It also discloses that messages and/or transmitted content may be analysed by text matching, natural language analysis, expert systems, artificial intelligence, image analysis, video analysis, etc., for instance for naked skin detection; as well as information regarding the origin of the message (e.g. message sender, domain or IP address from where the message was sent, etc.). The child may receive points to reward a safe behaviour, that can then be redeemed for certain awards, while the parents have access to statistics. The message content acceptable rules may be customized and organized in different levels, orders, or hierarchies, but this organization is not specified and cannot be automatically adjusted to the individual needs.

US20130124192 by Cyber 360 discloses the use of sentiment analysis on text messages to assist parents or other individuals in monitoring social networking activity and/or mobile phone usage of their children or others. Real-time alerts may be generated. A rules engine is used, which can operate on: keyword analysis based on predefined word whitelists or blacklists; sentiment analysis (based on a dictionary of words with a sentiment score); or structure analysis (grammatical sentence structure). A major limitation of this approach is that this rule engine is still statically pre-defined and cannot be automatically adapted to the individual needs.

There is therefore a need for improved systems and methods to continuously monitor social network usage and detect incidents in accordance with evolving user preferences and in the context of other factors like overall phone usage, night time usage etc which help better qualify whether social media usage is normal, excessive or abusive.

### Summary

Disclosed herein is a method to detect an incident from the social network activity of a user, performed by one or more computers, the method comprising: obtaining user preferences that identify social network content features and social network interaction context features associated with a threat from a social network activity; harvesting social network posts to extract at least one social network content and the associated interaction context; extracting content features from the content with at least one content analyser module; extracting interaction context features from the interaction context with a context analyser module; fusioning the content features and the context features with an incident spotter module; detecting an incident if the fusioned content and context feature values exceed an incident detection threshold, the incident detection threshold being a function of the user preferences; reporting a notification of the incident to the user; obtaining, from the user, feedback on the relevance of the spotted incident; and adapting the user preferences according the user feedback.

### Brief description of the drawings

FIG. 1 shows an example social media monitoring system.
FIG. 2 is a flow diagram of an example process for generating event notifications from social media data.
FIG. 2a is a flow diagram of an example process for analysing the context features from a social media post that may be relevant for incident threat detection.
FIG. 2b is a flow diagram of an example process for classifying an image/video content and extract content features that may be relevant for incident threat detection.
FIG. 2c is a flow diagram of an example process for detecting and reporting incident from a number of content features, context features, and user preferences for incident threat detection.
FIG. 3 is a flow diagram of an example process for adapting the content analysers, the context analyser, the threat detection and the incident detection to individual application needs in accordance with continuously evolving user preferences.

### Detailed description

This specification generally describes a social media monitoring system that analyses content data and related context information from a social network. The social media may be for instance Facebook, Twitter, Instagram, Snapchat, Whatsapp, or in general any social network application dealing with user generated content data in an interactive context.

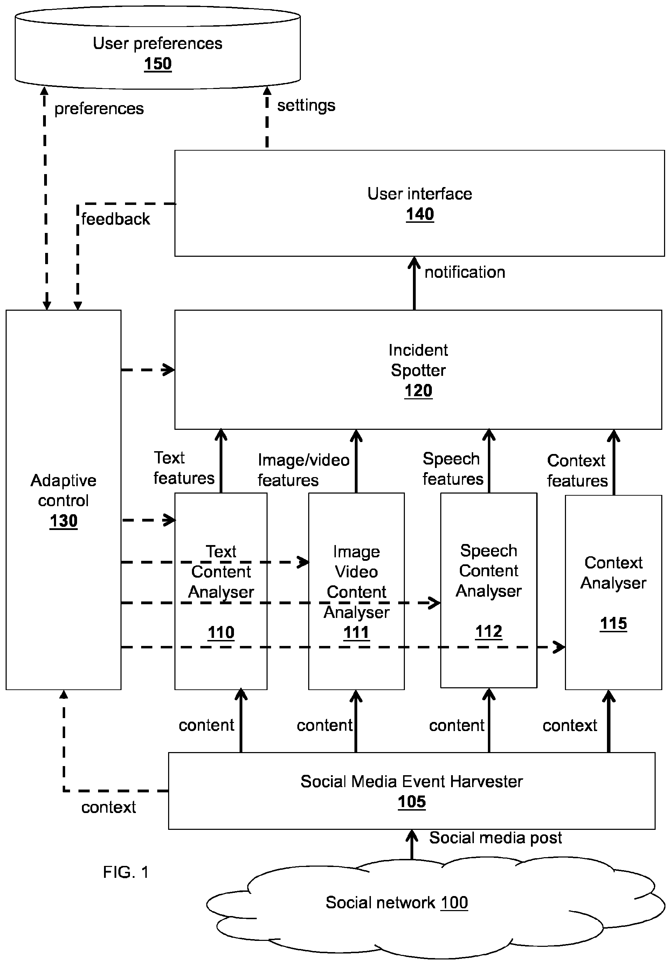

With reference to FIG.1, the social media monitoring system may extract a social media post from a social network 100 associated with a user in accordance with user preferences 150. The user preferences 150 may comprise the necessary credentials to automatically access the social network posts, for instance the Facebook account information. The user preferences 150 may be set by means of a user interface 140. In the case of a parental control monitoring system, the user preferences 150 may comprise both parental preferences (e.g. parental control age threshold settings and parental notification settings for incident, such as the parent email, or SMS number) and child preferences (e.g. user interface look and feel, notification settings such as the child email or SMS number).

The social media monitoring system may comprise a social media event harvester 105 to harvest multimedia content from the social network 100 post, as well as the associated context, such as the interactions with other users around this content (for instance, "share", "like"). A social media post event may be harvested either automatically each time a new content is created, received or shared through the social network user account (notification push mode, in particular for instantaneous content such as chat content, or twitter feeds using the GET statuses/firehose function in the Twitter API) or on a regular basis (polling mode, in particular for published content such as wall posts, for instance using a cron command in a UNIX system). In a possible embodiment the individual social network API (Application Programming Interface) call may be used. In another possible embodiment a standardized API call may be used, for instance JSON/REST which currently unifies more than 30 social networks API into a single framework as known to those skilled in the art of social networking programming. Other embodiments and combinations of the above embodiments are also possible.

In general, various modalities of unstructured content may be harvested by the social media event harvester 105, routed according to their format, and analysed into structured content features by a dedicated content analyser, suitable to the content format:
- Text content analyser 110 for text content, including comments content associated with a formerly posted content.
- Image and video content analyser 111 for pictures and movies.
- Speech recognition analyser 112.

The text content analyser 110 may comprise one or more atomic text analysis modules such as for instance: topic/keyword extraction, text pattern matching, white list filter, black list filter, sentiment analysis classifier, information retrieval analyser. The image and video content analyser 111 may comprise one or more atomic image analysis modules such as for instance: visual object recognition, pose detection, scene detection, face detection, emotion detection, age and gender recognition; and one or more atomic video analysis modules such as: scene change detection, motion detection, sound fingerprinting. The speech recognition analyser 112 may comprise one or more speech recognition modules such as for instance: voice recognition, foreign language translation, explicit content detection. As will be understood by one skilled in the art of multimedia content management, other types of content analysers may be integrated into the social media monitoring system as new classification technologies and/or new media content usage develop, for instance 3D content analysis for virtual reality scene classification in virtual reality content sharing applications, or sensor content classification for internet of things/connected objects content sharing applications (e.g. ambient sensors data, health monitoring data).

The content analysers 110, 111, 112 may convert unstructured content in a diversity of input formats out from the social media event harvester 105 into a set of content features matching the specific needs of the incident spotter 120 in accordance with the user preferences. For instance in the case of a parental control application, content features such as nudity, weapons, blood, violence, sex, and explicit text or speech keywords, for instance to detect cyberbullying, may be spotted by one or more content analysers. Both for parental control as well as for youth empowerment application, other features like overall engagement with the mobile device, time of day , sleep disruption due to late-night usage might be factored into overall content analysis.

As will be apparent to those skilled in the art of deep learning and multimodal classification, media content classification into an incident detection by the incident spotter 120 may use supervised learning models such as support vector machines (SVM) or unsupervised neuro-inspired models such as convolutional neural networks (CNN), restricted Boltzmann machines (RBM), or auto-encoders. Various fusion methods may be used to generate a fused classification result out from various media content input modalities with different features, depending on whether the fused classification directly works on the input modalities features vector space (early fusion), or combines the results of independent classifiers, each assigned to a different input modality (late fusion). Intermediate, filtered and/or hybrid multimodal fusion models are also possible, for instance by selecting the direct or the aggregate fusion depending on the actual input data, as described for instance in US20160379086 for gender classification out of social media posts. In the context of object classification by machine learning algorithms, the fusion operation is used to combine more than one modality to classify the object. In the context of social network posts, one modality can be the image of the post and another modality the caption associated to the image. Fusioning the two modalities means using characteristics from both the image and the caption to classify the post.

In a possible embodiment, each content analyser 110, 111, 112 may comprise an independent content classifier to output a pre-classified content feature for each independent modality. The incident spotter 120 may then combine the pre-classified output feature vectors from different modalities individual classifiers by using late fusion models as known to those skilled in the art of deep learning system design. In pattern recognition and machine learning, a feature vector is an n-dimensional vector of numerical features that represent some object. Many algorithms in machine learning require a numerical representation of objects, since such representations facilitate processing and statistical analysis (see also https://en.wikipedia.org/wiki/Feature_vector).

In another possible embodiment, the incident spotter 120 may directly classify content features out from at least one content analyser 110, 111, 112 by applying an early fusion model or a hybrid fusion model, as known to those skilled in the art of deep learning system design.

The social media event harvester 105 may also collect context information associated with a social media post, such as the date and time information, whether the content is an original post from the end user or whether it is a shared post, what is the network of recipients, and what is the interaction pattern by the recipients, for instance "share" and "like" actions. The context information may be fed by the social media event harvester 105 into a context analyser module 115 in charge with extracting context features associated with a possible threat. In a possible further embodiment, the context information may also be fed to an adaptive control module 130 to facilitate the adaptation of the social monitoring incident detection methods to evolving social network environments and user interaction contexts.

An incident spotter module 120 may then apply multimodal fusion to the content features out of the content analysers 110, 111, 112 and the context features retrieved by the context analyser 115 to derive incident detection features. The incident detection features may trigger an incident notification vector if they exceed an incident detection threshold in accordance with adaptive user preferences 150, as indicated from the adaptive control module 130. The incident spotter module 120 may further classify the detected threats into different incident alert events and alert levels to raise a notification to the user through the user interface 140. Example of incidents may comprise for instance: inadequate adult content, reputation management concern, privacy leakage, intimate content, inadequate violent content. The notification may also include a link to associated advice to be fed back to the user through the user interface 140.

In a possible embodiment, the relevance of the incident spotting notifications may be explicitly collected through the user interface 140 and fed back into the adaptive control module 130 to continuously adapt the user preferences 150 for content classification, context analysis and/or incident threat detection. As will be apparent to one skilled in the art of user interfaces, the initial user preferences settings as well as the adaptive user feedback may be explicitly collected by various means, for instance by means of a wizard, a questionnaire, a quiz, with training material and/or real material. For instance the user may be asked to classify certain content threats by browsing through training material and/or real material collected by the social media harvester 105. In another possible embodiment, the spotting feedback may also be automatically analysed by the adaptive control module 130 from monitoring the user behaviour on the user interface 140 or directly from the social network context data as received form the social media event harvester 105. Examples of user behaviour may comprise for instance the deletion of a content piece, the lock of a child access for a period of time, the blocking of specific social network connections, etc.). A combination of explicit and implicit user feedback collection may also be used by the adaptive control module 130. In a possible embodiment, the user preferences 150 may comprise any combination of supervisor preferences (for instance from the parent or the employer representative) and end user preferences (for instance from the kid or the employee). The supervisor preferences may supersede the end user preferences, but other embodiments are also possible. In a possible embodiment, the user feedback may comprise a combination of supervisor feedback (for instance from the parent or the employer representative) and end user feedback (for instance from the kid or the employee). The supervisor feedback may supersede the end user feedback, but other embodiments are also possible. In a possible embodiment, the incident spotting notification may also comprise both an end user notification and a supervisor notification, in accordance with different supervisor preferences and/or feedback and end user preferences and/or feedback.

In a possible embodiment, the content analyser atomic modules 110, 111, 112 may take a diversity of content formats as input, and may be configured by an adaptive control module 130 to classify the content along a feature dataset that fit the specific needs of the application (for instance parental control), the user preferences 150 (both the parent and the child preferences), and/or the user and social media context in association with the social media content to be classified. For instance the user preferences 150 may enable or disable or give more weight to one or another content analyser module 110, 111, 112 and/or the context analyser module 115. The user preferences 150 may also comprise content analyser and/or context analyser parameters such as a list of specific words to be detected by the text analyser 110, a character recognition module part of the image/video content analyser 111, and/or speech recognition 112. In a further possible embodiment, the content and/or context analyser output feature datasets may also dynamically evolve depending on the spotting feedback from earlier notifications raised by the incident spotter 120.

In a possible embodiment, the adaptive control module 130 may configure the incident spotter 120 to raise notifications to the user in accordance with the specific needs of the application (for instance parental control), the user preferences 150 (both the parent and the child preferences), and/or the user and social media context in association with the social media content to be classified. In a further possible embodiment, the alert events and levels may also dynamically evolve depending on the spotting feedback from earlier notifications raised by the incident spotter 120. For instance the relative weight of the features to trigger a threat detection notification by the incident spotter 120 may be adapted in accordance with the user preferences 150 and user feedback as collected by the adaptive control module 130. In some embodiments, certain features may also be ignored (full threshold - filter out) or result in an incident detection whatever the context features (zero threshold - pass through).

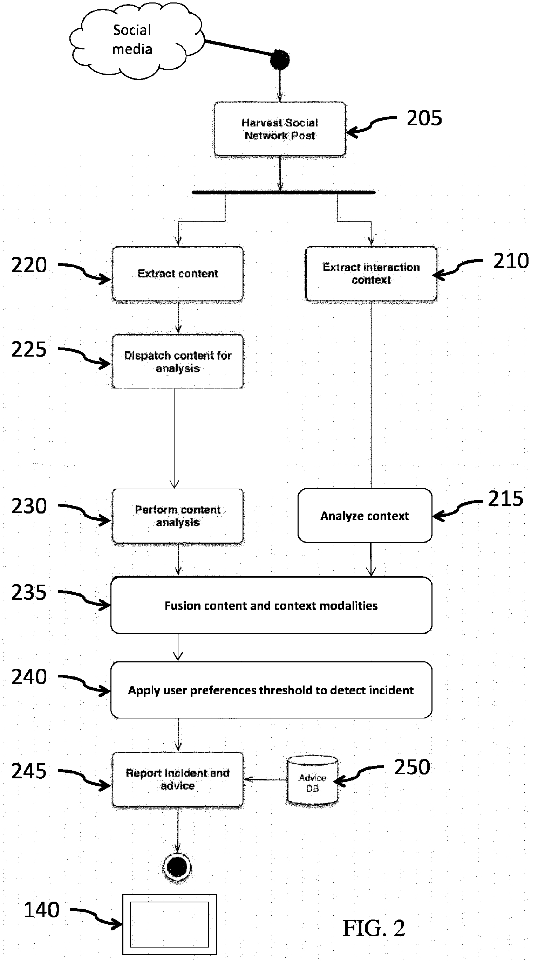

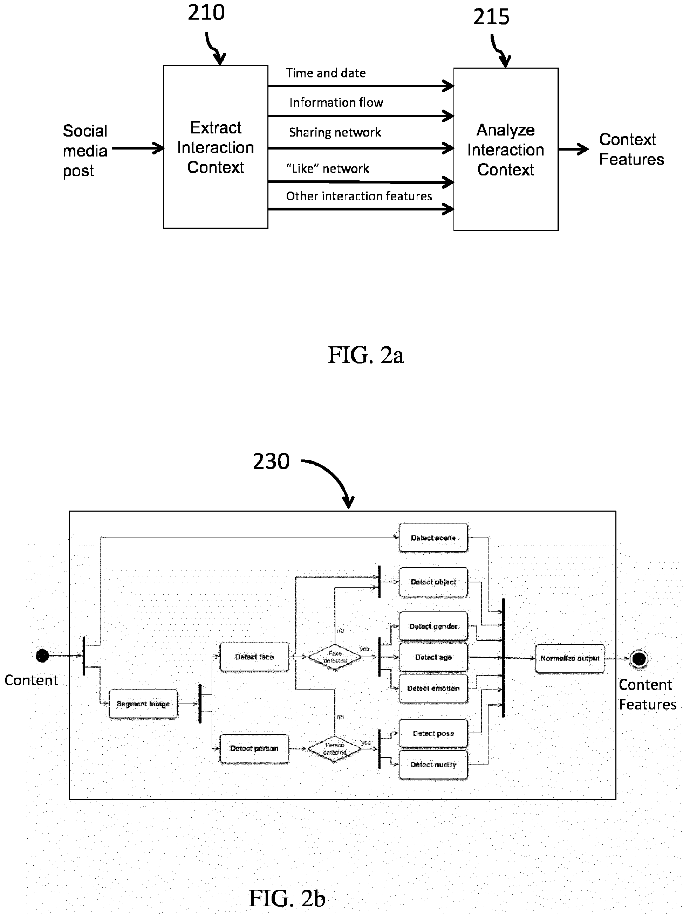

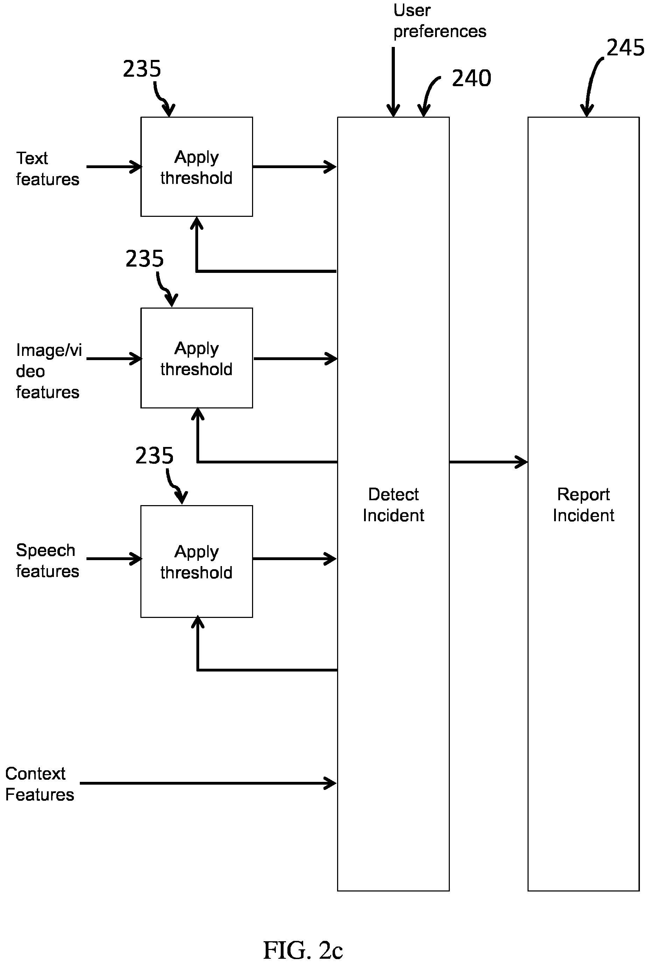

FIG. 2 shows a flow diagram of an example process 200 for generating one or more notifications for an input social media data content and context. The example process 200 may be performed by a system of one or more data processing units located in one or more locations and interconnected by one or more communication networks. In a preferred embodiment, the process 200 receives as input content and context associated with a social media data 100, analyses the content and context, and issues a notification to the end user through the user interface 140 whenever the content and context analyses detects a wrong behaviour. The process 200 may comprise:
- harvesting 205 social media data, such as for instance social network posts, with the social media event harvester module 105;
- extracting 210 the interaction context for a social media data, such as for instance the time and date, the target audience, whether it is a user-generated content or a sharing of a post originated by a different user, and the corresponding interaction status (how many "likes" and by whom, how many "shares" and by whom, presence or absence of comments, presence or absence of a user photo tagging, etc.), with the social media event harvester module 105;
- extracting 220 the content and identifying its type and format, such as for instance an image, a video, a vocal message, a text, a multimedia file, with the social media event harvester module 105;
- based on content type and format, dispatching it 225 to the corresponding content analyser module 111, 112 or 113, with the social media event harvester module 105;
- analysing 230 the content, with the content analyser 111, 112 or 113, to extract a vector of relevant content features measured with a relevance likelihood metric;
- extracting 210 the interaction context, with the social media event harvester module 105;
- analysing 215 the interaction context, with the context analyser 115 to extract a vector of relevant context features;
- fusioning the content feature vector and the context feature vector into an incident feature vector, with the incident spotter 120;
- detecting 240, with the incident spotter 120, and reporting 245 an incident to an end user through the user interface 140, if the incident feature vector values exceeds a threshold, the threshold depending on the user preferences 150.

In a possible embodiment, as represented for instance on FIG.2, the detected incident may be classified in a pre-defined category for which a database 250 of user advice may be available. Based on the incident category, a suitable advice may then be extracted from the advice database 250 and provided to the user through the user interface 140. The user may also provide explicit feedback about the notification, which may be used to adjust the user preferences 150.

FIG. 2a shows an exemplary workflow for a social media event harvester 105 adapted to perform the interaction context extraction step 210 and a context analyser module 115 adapted to perform the context analysis step 215. The interaction context may comprise information associated with the harvested post, such as time and date, information flow direction (user generated, in - received - or out - shared - content distribution flow), social network interaction patterns information (such as networks of "share" and "like" interactions). As will be understood by one skilled in the art of social media networks, other interaction context information data may be extracted and analysed. The example process of FIG. 2a may be performed by a system of one or more data processing units located in one or more locations and interconnected by one or more communication networks. The interaction context analysis step 215 may depend upon the application needs, for instance in the case of cyberbullying different threats are associated with in and out content flow directions, while in the case of religious radicalization, more analysis has to be focused on the social network profiles at a deeper depth (e.g. blacklisting of some twitter accounts associated with religious radicalization and spotting them when there are less than a few "share" connection levels from the user). The interaction context analysis step 215 may combine a diversity of observed data into a list of observed context features. In a possible embodiment, the context features may be represented as a vector of binary values (1: observed/ 0: not observed), but other embodiments are also possible, for instance fuzzy logic values may be used (1: clear evidence observed; 0.5: uncertain evidence observed; 0: no evidence observed). In another possible embodiment (not represented in FIG.2), the interaction context analysis step 215 may comprise analysing an interaction context content flow with a content analyser module 111, 112, 113 adapted to the content format. For instance, to more specifically detect a cyberbullying incident, a text analyser 110 or a speech analyser 112 may analyse third party user comments harvested from the interaction context beyond the original social media content post. The interaction context features may then comprise a vector of context-derived content features, in addition to or in combination with a vector of observed context features.

FIG. 2b shows an exemplary workflow for a content analyser module 111 adapted to perform the image/video content analysis step 230. As will be apparent to those skilled in the art, existing content analysis solutions such as the visual recognition technology from Clarifai (www.clarifai.com) may be used to automatically return a number of tags associated with pre-defined categories identified in the image content. Alternately, a dedicated, more configurable solution may be developed depending on the actual application needs. As depicted on FIG. 2b, image/video content analysis workflow may comprise the following steps:
- detecting a scene;
- segmenting the image and
   o detecting faces: if a face has been detected, further detect gender, age, and/or emotion, and measure an associated feature presence likelihood;
   o detecting people: if a person has been detected, further detect pose and/or nudity, and measure an associated likelihood;
   o if no faces nor people have been detected, detect objects subject to specific threats, such as weapons or knifes, and measure an associated likelihood.
- aggregating and normalizing the measured feature likelihoods into a content feature vector.

The exemplary workflow in FIG. 2b is described for illustrative purpose only. One skilled in the relevant art will recognize that other components and configurations may be used to extract a set of features from a content. For instance the exemplary workflow in FIG. 2b may be further adapted to detect objects in parallel with faces and persons. Other content analysers may apply a different workflow, for instance a speech recognition analyser may be adapted to extract keywords and emotion categories from a vocal message in a social media post. The features themselves may be adapted in accordance with the application, for instance various features associated with the anorexia metal disorder may be extracted in a teenager protection application, while other features associated with corporate assets such as logos and confidential diagrams may be extracted in a corporate information leakage monitoring application.

The content feature occurrences may be measured by each detection step in the form of ranks as sum of detection triggers on/off, for instance along a video thread. They may then require normalization to be more homogeneously processed in next incident spotting steps. In a possible embodiment, the feature occurrences are converted into feature likelihoods in the range [0,1], where 0 denotes a zero-likelihood of occurrence and 1 denotes a 100% confirmed occurrence.

The feature likelihoods may be organized as a table (label, value) or as a feature vector where each element of the vector/value represents the likelihood of a labelled feature to have occurred in the analysed content. Values may also be binary for Boolean decisions (e.g. 0="not found", 1="found"). They may also be organized in a matrix where each row represents a general category (for instance, violence) and each column represents a specific feature (for instance, weapon, knife, fight). Other representations are also possible, for instance as a tree or a graph, subject to the actual organisation of the underlying application features.

FIG. 2c shows an exemplary workflow for an incident spotter module 120 adapted to perform the content and context feature fusioning step 235, the threat incident detection 240, and the incident reporting step 245. The example process of FIG. 2c may be performed by a system of one or more data processing units located in one or more locations and interconnected by one or more communication networks. The incident spotter module 120 may be connected to the content analysers modules 110, 111, 112, the context analyser module 115 and/or the adaptive control module 130 to perform the example process of FIG. 2c once programmed to this end. The incident spotter module 120 analyses a threat level associated with the context features in accordance with the user preferences 150, for instance the fact that a newly generated content is shared by the user out of his/her regular network of family and friends or with an older user may be associated with a threat for a young user. The incident spotter module 120 fusions 235 the content features and context features and applies 240 a threshold to each set of content features to detect threats. In a preferred embodiment, the thresholds are adapted to the user preferences 150 as received from the adaptive control module 130. In a possible further embodiment, the incident detection thresholds may also be adapted to the latest context features as received from the context analyser 115. For instance, familiar keywords may be associated with a threat when used out of the regular network of family and friends, while they may not trigger a threat detection when used within the familiar network. The incident spotter module 120 further detects an incident by analysing the results of individual content threat detection in combination with context threat detection, for instance when a predefined sum of content and context features is still reached after thresholding. If an incident has been detected, the incident spotter module generates a notification and reports 245 the incident notification to the end user through the user interface 140.

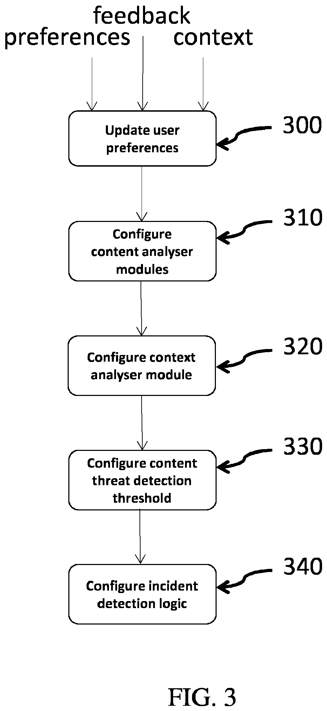

FIG. 3 shows an exemplary workflow for an adaptive control module 130 adapted to dynamically configure the content analyser modules 110, 111, 112, the context analyser module 115, and/or the incident spotter module 120. The adaptive control module 130 receives the initial user preferences settings as configured by the end user from the user interface 140, feedback on notification relevance by the end user from the user interface 140, and/or context information from the social media event harvester 105, and adapts accordingly 300 the user preferences for threat detection. It may use the adapted user preferences 150 to configure 310 the content analyser modules, for instance by parametrizing the lists of content features to be classified. It may use the adapted user preferences 150 to configure 320 the context analyser modules, for instance by indicating which social network interaction patterns to be searched as potentially associated with threats. It may also use the adapted user preferences 150 to configure 330 the incident detection thresholds, for instance nudity or weapons may raise different threats according to the socio-cultural context of the user. It may also use the adapted user preferences 150 to configure 340 the incident detection logic for instance by associating different weights to the content analyser threat detection and the context threat detection input levels.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field-programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities.

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are believed to be described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present invention. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present invention as represented by the appended claims. The specification and drawings are, accordingly, to be regarded in an illustrative rather than a restrictive sense.

## Claims

1. A method to notify an incident from the social network activity of a user, performed by one or more computers, the method comprising:
- harvesting social network posts to extract at least one social network content data and at least one associated interaction context information data,
- extracting at least one vector of content features from the social network content data with at least one content analyser module,
- extracting at least one vector of interaction context features from the interaction context information data with a context analyser module,
- fusioning, with the incident spotter (120), the content feature vector and the interaction context feature vector into an incident feature vector;
- detecting (240), with the incident spotter (120), and reporting (245) an incident to an end user through the user interface (140), if the incident feature vector values exceeds a threshold, the threshold depending on the user preferences (150).
- obtaining, from the user through the user interface (140), feedback on the relevance of the detected incident,
- adapting the user preferences (150) according the user feedback.

2. The method of claim 1, wherein the user preferences comprise supervisor preferences and end user preferences.

3. The method of claim 1 or 2, wherein the user feedback is obtained from a user interface wizard.

4. The method of claim 1 or 2, wherein the user feedback is obtained from the social network activity.

5. The method of any of the claims 1 to 3, wherein the incident detection threshold may disable a set of content features to spot an incident detection.

6. The method of any of the claims 1 to 3, wherein the incident detection threshold may force a set of content features to spot an incident detection.

7. The method of any of the claims 1 to 6, wherein the interaction context features may disable a set of content features to spot an incident detection.

8. The method of any of the claims 1 to 6, wherein the interaction context features may force a set of content features to spot an incident detection.

9. The method of any of the claims 1 to 8, wherein extracting content features from the social network content with at least one content analyser module further comprises a step of classifying the content features.
